# EUROPÄISCHE PATENTSCHRIFT

(11) **EP 1 260 143 B1**
(45) Veröffentlichungstag und Bekanntmachung des Hinweises auf die Patenterteilung: **01.07.2009**
(21) Anmeldenummer: 02004966.4
(22) Anmeldetag: 05.03.2002
(51) Int. Cl.: A22C 11/02

(54) **Darmhalteeinrichtung**
Casing holding device
Dispositif de retenue de boyaux

(30) Priorität: 16.05.2001 DE 10123808
(43) Veröffentlichungstag der Anmeldung: 27.11.2002
(73) Patentinhaber: Heinrich Frey Maschinenbau GmbH, 89542 Herbrechtingen-Bolheim (DE)
(72) Erfinder:
(74) Vertreter: Manitz, Finsterwald & Partner GbR

(56) Entgegenhaltungen:
- DE-A- 2 218 426
- DE-C- 190 568
- DE-U- 29 517 333
- DE-U- 29 603 762
- US-A- 6 132 302

## Beschreibung

Die Erfindung betrifft eine Darmhalteeinrichtung für eine Maschine zum portionierenden Abfüllen von pastösen Produkten, insbesondere von Wurstbrät in Natur- und Kunstdärme, mit wenigstens einem an einem hinteren Ende beschickbaren drehbaren Füllrohr, auf das ein insbesondere geraffter Darm aufziehbar ist und das an seinem vorderen Ende eine Abgabeöffnung aufweist.

Bei der Herstellung von Wurststrängen wird der auf das Füllrohr aufgezogene Darm durch das aus der Abgabeöffnung austretende Produkt abgezogen und gefüllt. Nach Abgabe einer vorgegebenen, einer Wurst entsprechenden Produktmenge wird der Darm abgedreht, woraufhin die nächste Wurst gebildet wird. Das Abdrehen kann durch Verdrehen der zuletzt gebildeten Wurst relativ zum Füllrohr oder durch Verdrehen des Füllrohres relativ zum bereits gebildeten Wurststrang erfolgen, wobei sichergestellt sein muß, daß sich der auf das Füllrohr aufgezogene Darm zusammen mit dem Füllrohr dreht, damit die zwei aufeinanderfolgende Würste trennende Darmabdrehung gebildet werden kann.

Vorrichtungen, die für ein Mitdrehen des Darmes beim Verdrehen des Füllrohres sorgen, sind grundsätzlich bekannt, z.B. aus der US 1,366,183 und der DE-PS-190568. Eine Vorrichtung gemäß Oberbegriff des Anspruchs 1 ist aus DE-295 17 333 U bekannt.

Aufgabe der Erfindung ist es, eine Darmhalteeinrichtung der eingangs genannten Art zu schaffen, die bei möglichst einfachem Aufbau und einfacher Bedienbarkeit für eine sichere Mitnahme des Darmes beim Verdrehen des Füllrohres sorgt, wobei insbesondere die Darmhalteeinrichtung den normalen Betrieb der Füllmaschine sowie das Aufziehen neuer Därme und die Beseitigung von Störungen z.B. beim Reißen des Darmes so wenig wie möglich beeinträchtigen soll.

Die Lösung dieser Aufgabe erfolgt durch die Merkmale des Anspruchs 1 und insbesondere durch, daß eine Darmhalteeinrichtung der eingangs genannten Art ein langgestrecktes, das Füllrohr umgebendes Halteorgan aufweist, das über einen hinteren Antriebsbereich zusammen mit dem Füllrohr verdrehbar ist und mit einem vorderen Haltebereich den Darm insbesondere im Bereich der Abgabeöffnung derart beaufschlagt, daß der Darm einerseits vom Füllrohr abziehbar und andererseits durch Verdrehen des Füllrohres in Drehung versetzbar ist, wobei das Halteorgan mehrteilig ausgeführt ist und zumindest in einem hinteren Antriebsabschnitt, mit dem das Füllrohr an einem gemeinsamen Drehantrieb fixierbar ist, sowie einen vorderen, mit dem Darm zusammenwirkenden Halteabschnitt zerlegbar ist.

Das erfindungsgemäße, langgestreckte Halteorgan, das vorzugsweise rohrförmig ausgebildet ist, ist über seinen hinteren Antriebsbereich zusammen und insbesondere synchron mit dem Füllrohr verdrehbar. Mit seinem Haltebereich sorgt das erfindungsgemäße Halteorgan dafür, daß bei gemeinsamer Drehung von Füllrohr und Halteorgan der Darm festgehalten wird und sich mitdreht, so daß die gewünschte Darmabdrehung gebildet wird. Die erfindungsgemäße Aufteilung des Halteorgans in einen hinteren Antriebsabschnitt, der das Füllrohr an dem gemeinsamen, insbesondere von dem freien Endbereich einer Antriebswelle gebildeten Drehantrieb festhält, sowie in einen vorderen Halteabschnitt, der den Darm beaufschlagt, gewährleistet eine sichere Mitnahme des Darmes, ohne den Betrieb der Füllmaschine zu beeinträchtigen. Indem der Drehantrieb des Füllrohres auch für das Halteorgan genutzt wird, braucht für einen Antrieb des Halteorgans durch das Füllrohr nicht gesorgt zu werden.

Von besonderem Vorteil der Erfindung ist, daß der Halteabschnitt des Halteorgans ohne Demontage des Füllrohres entfernt werden kann, das dabei mittels des Antriebsabschnitts des Halteorgans am gemeinsamen Drehantrieb fixiert bleiben kann. Zur Beseitigung von Störungen im Zwischenraum zwischen dem Füllrohr und dem Halteorgan, z.B. bei einem Reißen des auf das Füllrohr aufgezogenen Darmabschnitts, braucht somit lediglich der Halteabschnitt des Halteorgans abgenommen zu werden, während das Füllrohr in seiner Betriebsstellung montiert bleibt.

Außerdem ist von Vorteil, daß das erfindungsgemäße Halteorgan so ausgebildet werden kann, daß der auf das Füllrohr aufgezogene Darm vor äußeren Einflüssen geschützt ist.

Vorzugsweise ist der Halteabschnitt in einem mit dem Darm zusammenwirkenden Bereich durch Abziehen des Darmes vom Füllrohr elastisch verformbar. Der elastische Bereich kann z.B. von einer aufsteckbaren Kunststoffkappe, die eine Durchgangsöffnung für das Füllrohr aufweist, gebildet werden.

Hierdurch kann der Halteabschnitt während eines Füllvorgangs, wenn der Darm vom Füllrohr abgezogen wird, nachgeben und ein problemloses Abziehen des Darmes gewährleisten. Während eines sich an den Füllvorgang anschließenden Abdrehvorgangs wird der Darm durch den elastischen Bereich dann wieder derart beaufschlagt, daß er sich mit dem Füllrohr mitdrehen kann.

Des weiteren wird erfindungsgemäß vorgeschlagen, daß der Halteabschnitt an mehreren in Umfangsrichtung verteilt angeordneten Stellen mit dem Darm haltend zusammenwirkt. Der vom Halteabschnitt auf den Darm ausgeübte Haltedruck kann hierdurch gezielt eingestellt werden.

In einer bevorzugten praktischen Ausgestaltung der Erfindung ist vorgesehen, daß der Halteabschnitt in einem zumindest näherungsweise senkrecht zum Füllrohr verlaufenden Wandbereich eine Durchgangsöffnung für das Füllrohr und den Darm aufweist, deren Begrenzungsrand mit dem Darm haltend zusammenwirkt. Die Durchgangsöffnung kann gezielt an das jeweils eingesetzte Füllrohr und die jeweils verwendete Darmart angepaßt werden.

Bevorzugt ist es dabei, wenn die Durchgangsöffnung eine von einer Kreisform abweichende Querschnittsfläche aufweist. Es hat sich herausgestellt, daß eine nicht-kreisförmige Durchgangsöffnung zu besonders guten Ergebnissen führt und sowohl ein störungsfreies Abziehen des Darmes beim Füllen als auch ein sicheres Festhalten des Darmes beim Abdrehen ermöglicht. Als besonders vorteilhaft hat sich eine ovale freie Querschnittsfläche der Durchgangsöffnung erwiesen.

In einer weiteren bevorzugten praktischen Ausgestaltung der Erfindung umfaßt der Halteabschnitt ein langgestrecktes, an seinem hinteren Bereich mit dem Antriebsabschnitt verbundenes Trägerteil sowie ein separates, mit dem Darm zusammenwirkendes Halteteil, das am Trägerteil lösbar angebracht ist. Als Halteteil ist z.B. eine aufsteckbare Kappe vorgesehen.

Hierdurch kann ein Trägerteil mit unterschiedlichen Halteteilen verwendet werden, wodurch die erfindungsgemäße Darmhalteeinrichtung auf einfache Weise an die jeweiligen Gegebenheiten angepaßt werden kann, ohne vollständig ausgewechselt werden zu müssen.

Besonders bevorzugt ist es, wenn das Halteteil kappenförmig ausgebildet ist und auf das freie Ende des Trägerteils aufgesteckt werden kann. Mit einer derartigen Haltekappe kann das insbesondere rohrförmige Trägerteil an seinem vorderen Ende verschlossen werden, wodurch der auf das Füllrohr aufgezogene Darm vor äußeren Einflüssen noch besser geschützt werden kann. Zum Aufziehen eines neuen Darmes kann dieser einfach über das Füllrohr und durch die Durchgangsöffnung in der Haltekappe hindurchgeschoben werden. Das erfindungsgemäße Halteorgan braucht hierbei nicht einmal teilweise demontiert zu werden.

Bevorzugt ist es ferner, wenn das Halteteil mittels eines ringförmigen Sicherungselementes am Trägerteil festgeklemmt ist. Eine sichere Mitnahme des Halteteils durch das sich drehende Trägerteil ist hierdurch gewährleistet.

Das Trägerteil ist vorzugsweise rohrförmig ausgebildet, wobei es insbesondere eine geschlossene Mantelfläche aufweist. Der im Inneren dieses Trägerrohres befindliche, auf das Füllrohr aufgezogene Darm ist hierdurch optimal vor äußeren Einflüssen geschützt, und zwar zumindest im wesentlichen über seine gesamte Länge, wenn gemäß einer bevorzugten Ausgestaltung der Erfindung das Halteorgan sich bis in den Bereich der Abgabeöffnung des Füllrohres erstreckt.

Ferner wird erfindungsgemäß vorgeschlagen, daß das Trägerteil aus einem lichtdurchlässigen und vorzugsweise glasklaren Material hergestellt ist, insbesondere einem Kunststoffmaterial. Das Innere des Trägerteils kann hierdurch von außen eingesehen werden, wodurch im Betrieb eventuell auftretende Probleme insbesondere beim Abziehen des Darmes frühzeitig erkannt werden können.

Des weiteren wird erfindungsgemäß vorgeschlagen, daß der Antriebsabschnitt und der Halteabschnitt des Halteorgans zusammengesteckt sind, insbesondere unter Zwischenlage wenigstens eines bevorzugt in Form eines O-Ringes vorgesehenen Koppelelementes.

Eine derartige Steckverbindung zwischen dem Antriebsabschnitt und dem Halteabschnitt des Halteorgans ist besonders einfach und schnell herstellbar und lösbar. Durch die bevorzugt vorgesehenen Koppelelemente zwischen dem Antriebsabschnitt und dem Halteabschnitt, die insbesondere in Form von Gummiringen vorgesehen sind, kann eine reibschlüssige Verbindung hergestellt werden, die eine sichere Mitnahme des Halteabschnitts durch den sich drehenden Antriebsabschnitt gewährleistet. Die Koppelelemente dienen außerdem zur Abdichtung des Inneren des Halteorgans im Bereich der Verbindung von Antriebsabschnitt und Halteabschnitt.

Um eine besonders sichere Mitnahme des Halteabschnitts zu gewährleisten, kann gemäß einer weiteren bevorzugten Ausgestaltung der Erfindung vorgesehen sein, daß der Antriebsabschnitt und der Halteabschnitt mittels einer formschlüssigen Verdrehsicherung drehfest miteinander gekoppelt sind, die vorzugsweise in Form einer Stift/Ausnehmung-Anordnung vorgesehen ist.

Der Antriebsabschnitt ist bevorzugt rohrförmig ausgebildet und weist insbesondere eine Länge auf, die weniger als die Hälfte und insbesondere weniger als ein Drittel der Füllrohrlänge beträgt. Vorzugsweise ist der Antriebsabschnitt mit dem gemeinsamen Drehantrieb verschraubt.

Zur Fixierung des Füllrohres am Drehantrieb ist gemäß einer besonders bevorzugten Ausgestaltung der Erfindung vorgesehen, daß das Füllrohr zwischen dem Antriebsabschnitt und dem Drehantrieb eingespannt ist. Dabei ist es gemäß einer Weiterbildung der Erfindung besonders bevorzugt, wenn das Füllrohr mittels eines nach innen vorstehenden Klemmflansches des Antriebsabschnitts gegen eine stirnseitige Anlagefläche des Drehantriebs gedrückt ist. Das Füllrohr kann an seinem hinteren Ende mit einem insbesondere trichterförmigen Einfüllbereich versehen sein, über den es mit dem Antriebsabschnitt des Halteorgans am gemeinsamen Drehantrieb festgehalten ist.

Ferner wird erfindungsgemäß vorgeschlagen, daß der Raum zwischen dem Füllrohr und dem Halteorgan über wenigstens eine Entlüftungsöffnung im Halteorgan mit der Umgebung in Verbindung steht.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine teilgeschnittene Draufsicht auf eine Darmhalteeinrichtung gemäß einer Ausführungsform der Erfindung,
- Fig. 2: die Darmhalteeinrichtung in einer perspektivischen Darstellung mit aufgeschnittenem Halteorgan, und
- Fig. 3: die Bestandteile des erfindungsgemäßen Halteorgans in einer Explosionsansicht.

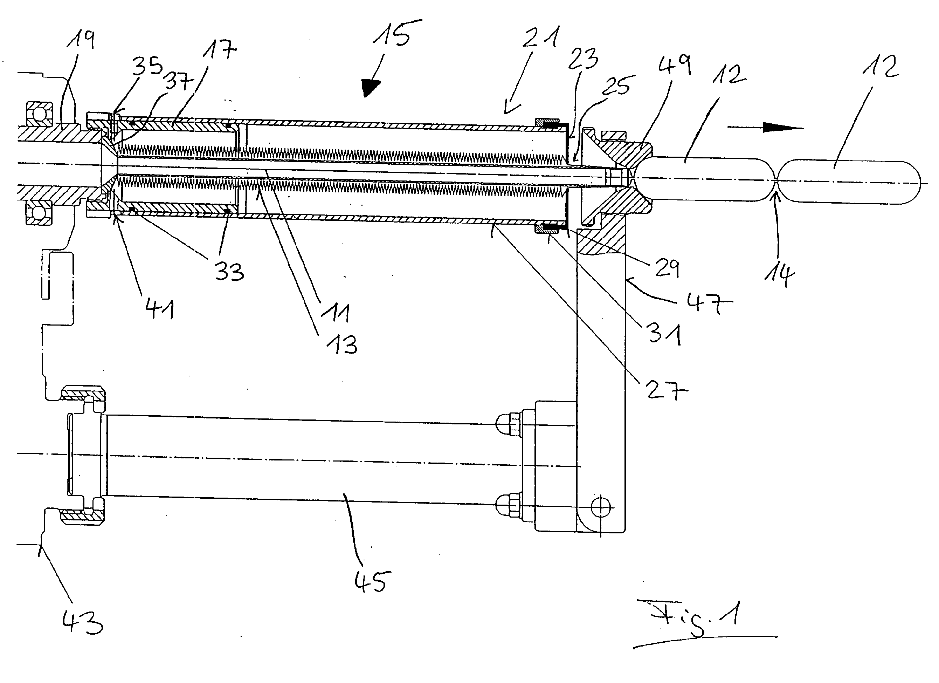

Die Fig. 1 - 3 zeigen eine erfindungsgemäße Darmhalteeinrichtung, die an einem Abdrehgetriebe 43 einer nicht dargestellten Füllmaschine angeordnet ist, mit der Wurstbrät in Natur- und Kunstdärme abgefüllt wird, um Wurststränge zu bilden.

Über einen Drehantrieb in Form einer Antriebswelle 19 des Abdrehgetriebes 43 kann ein Füllrohr 11 in Drehung versetzt werden. Das Füllrohr 11 weist an seinem hinteren Ende einen Einfülltrichter 37 auf, über den es mit Wurstbrät beschickt wird. Mit seinem vorderen, eine Abgabeöffnung aufweisenden Ende ist das Füllrohr 11 in einer Darmbremshülse 49 gelagert. Parallel versetzt zum Füllrohr 11 erstreckt sich ein am Abdrehgetriebe 43 angebrachter Auslegerarm 45, der über einen verschwenkbaren, in einer Stützstellung senkrecht zum Auslegerarm 45 verlaufenden Stützarm 47 die Darmbremshülse 49 festhält und dadurch das Füllrohr 11 abstützt.

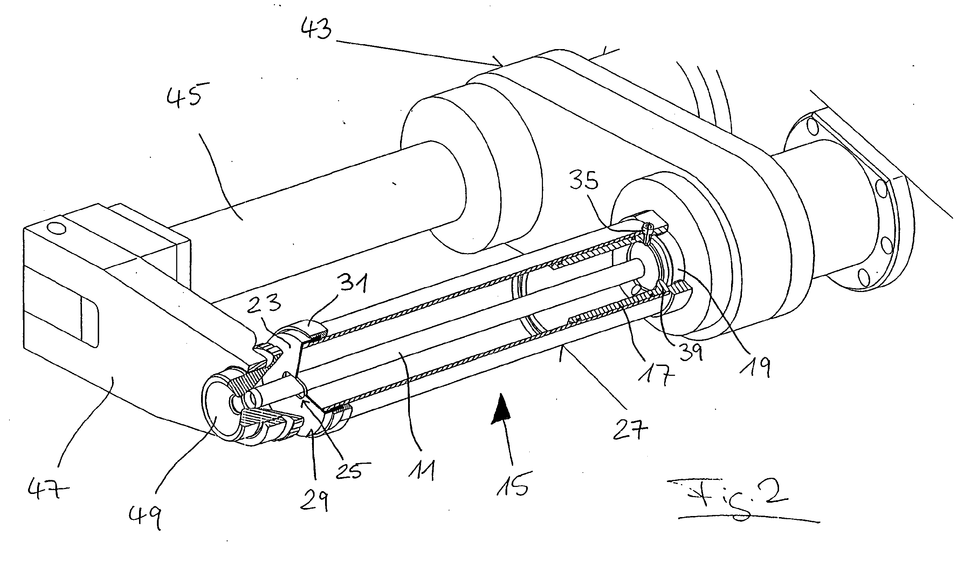

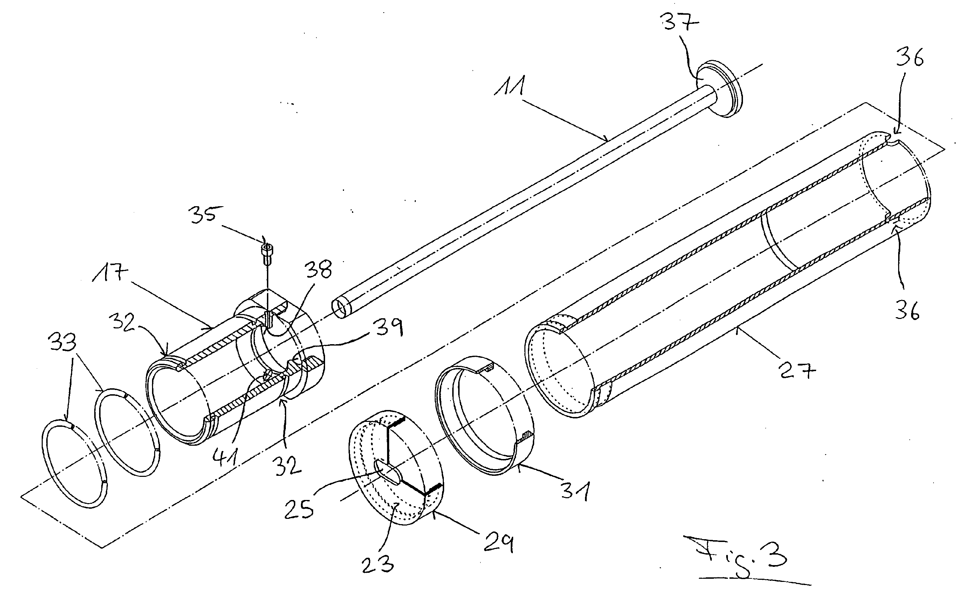

Das Füllrohr 11 ist von einem langgestreckten rohrförmigen Halteorgan 15 umgeben. Das Halteorgan 15 ist mehrteilig ausgebildet, wobei die einzelnen Bestandteile des Halteorgans 15 insbesondere in der Explosionsansicht der Fig. 3 in einer aufgeschnittenen Darstellung gezeigt sind. Das Halteorgan 15 umfaßt einen rohrförmigen Antriebsabschnitt 17, der mit dem freien Ende der Antriebswelle 19 verschraubt ist. Mit einem radial nach innen vorstehenden Klemmflansch 39 (vgl. insbesondere Fig. 3) wirkt der Antriebsabschnitt 17 mit dem Füllrohr 11 derart zusammen, daß in der in Fig. 1 und 2 dargestellten Betriebsstellung das Füllrohr 11 über seinen trichterförmigen Einfüllbereich 37 zwischen dem Klemmflansch 39 und der Stirnseite der Antriebswelle 19 eingeklemmt ist. Der Antriebsabschnitt 17 des Halteorgans 15 dient dadurch als Befestigungsmittel für das Füllrohr 11.

Wie insbesondere aus Fig. 3 hervorgeht, ist der Antriebsabschnitt 17 mit einer Gewindebohrung 38 für eine Innensechskantschraube 35 sowie an der gegenüberliegenden Seite mit einer Entlüftungsbohrung 41 versehen. Außerdem weist der Antriebsabschnitt 17 zwei Umfangsnuten 32 für als Koppelelemente dienende O-Ringe 33 aus Gummi auf. Der Antriebsabschnitt 17 ist ferner einstückig aus Kunststoff hergestellt.

Des weiteren umfaßt das erfindungsgemäße Halteorgan einen mehrteiligen Halteabschnitt 21, der von einem rohrförmigen Trägerteil 27, einem kappenförmigen Halteteil 29 sowie einem Klemmring 31 für das Halteteil 29 gebildet ist.

Das aus einem transparenten Kunststoffmaterial hergestellte und eine geschlossene, d.h. durchbrechungsfreie Mantelfläche aufweisende Trägerrohr 27 ist auf den Antriebsabschnitt 17 aufgesteckt, wobei die O-Ringe 33 für eine reibschlüssige Verbindung zwischen dem Antriebsabschnitt 17 und dem Trägerrohr 27 sorgen und eine sichere Mitnahme des Trägerrohres 27 bei sich drehendem Antriebsabschnitt 17 gewährleisten.

Wie insbesondere Fig. 3 zeigt, ist das Trägerrohr 27 an seinem hinteren Ende mit zwei einander gegenüberliegenden Ausnehmungen 36 versehen, die im zusammengesetzten Zustand mit der Gewindebohrung 38 und der Entlüftungsbohrung 41 des Antriebsabschnitts 17 ausgerichtet sind.

Während die Länge des Antriebsabschnitts 17 weniger als ein Drittel der Füllrohrlänge beträgt, ist das Trägerrohr 27 nur wenig kürzer als das Füllrohr 11 und erstreckt sich im dargestellten montierten Zustand bis kurz vor die Darmbremshülse 49.

Das auf das vordere Ende des Trägerrohres 27 aufgesteckte, kappenförmige Halteteil 29 ist aus einem elastisch verformbaren Kunststoffmaterial hergestellt. Der senkrecht zur Längsachse des Füllrohres 11 und des Halteorgans 15 verlaufende Wandbereich 23 der Haltekappe 29, der auch als Membran bezeichnet wird, kann bei auf das Trägerrohr 27 aufgesteckter Haltekappe 29 in Richtung der Längsachse ausgelenkt werden.

In der Haltekappe bzw. der Membran 29 ist eine zentrale Durchgangsöffnung 25 für das Füllrohr 11 und einen auf das Füllrohr 11 aufgezogenen, gerafften und in diesem Zustand auch als Darmraupe bezeichneten Darm 13 ausgebildet. Wie insbesondere Fig. 3 zeigt, weicht die freie Querschnittsfläche der Durchgangsöffnung 25 von einer Kreisform ab und ist oval ausgebildet. Die Durchgangsöffnung 25 ist derart bemessen, daß ihr kleinster Durchmesser, d.h. der Abstand zwischen ihren parallel verlaufenden Begrenzungsrändern etwa dem Außendurchmesser des Füllrohres 11 entspricht. In Abhängigkeit von den jeweiligen Gegebenheiten und Anforderungen, insbesondere in Abhängigkeit von der jeweils verwendeten Darmart, dem jeweiligen Darmkaliber und/oder der Dicke der Darmhülle kann dieser Abstand kleiner sein als der Füllrohraußendurchmesser, so daß die Membran auf dem Füllrohr aufsteht, der Abstand kann genau dem Füllrohraußendurchmesser entsprechen, oder der Abstand kann etwas größer sein als der Außendurchmesser des Füllrohres 11.

Bevorzugt ist die Haltekappe 29 derart ausgebildet, daß während des Abdrehens der Darm 13 gegen die Außenwand des Füllrohres 11 gedrückt wird und zwischen dem Füllrohr 11 und dem Begrenzungsrand der Durchgangsöffnung 25 verdrehsicher eingeklemmt ist. Durch entsprechende Wahl der Größe und der Form der Durchgangsöffnung 25 können die Druck- oder Andrückverhältnisse gezielt eingestellt und an die jeweiligen Gegebenheiten angepaßt werden. Es kann ein Satz von unterschiedlich ausgebildeten Haltekappen 29 vorgesehen sein, so daß die erfindungsgemäße Darmhalteeinrichtung einfach durch Auswechseln der Haltekappe 29 unter Beibehaltung der übrigen Bestandteile an veränderte Verhältnisse angepaßt werden kann.

In jedem Fall ist die - in der dargestellten Ausgestaltung ovale - Durchgangsöffnung 25 der Haltekappe 29 so bemessen, daß im Betrieb der Darm 13 von dem Begrenzungsrand der Durchgangsöffnung 25 an einander gegenüberliegenden Bereichen derart beaufschlagt wird, daß der Darm 13 einerseits vom Füllrohr 11 problemlos abgezogen werden kann und andererseits bei gemeinsamer Drehung des Füllrohres 11 und des Halteorgans 15 in Drehung versetzt wird.

Die Durchgangsöffnung 25 kann grundsätzlich auch eine andere als die dargestellte ovale Form aufweisen, wobei prinzipiell auch eine kreisförmige Durchgangsöffnung 25 vorgesehen sein kann.

Im Bereich seines vorderen Endes ist das Trägerrohr 27 mit einer Umfangsnut versehen, in welche die Haltekappe 29 mit einer entsprechenden, nach innen vorstehenden Rippe eingerastet ist. Als Sicherungselement ist der Klemmring 31 vorgesehen, der zur Sicherung der aufgesteckten Haltekappe 29 über deren Umfangswand geschoben wird und dadurch die Haltekappe 29 am Trägerrohr 27 festhält. Hierdurch ist eine sichere Mitnahme der Haltekappe 29 beim Verdrehen des Trägerrohres 27 gewährleistet.

Im Betrieb der Füllmaschine wird bei stillstehendem Füllrohr 11 Wurstbrät über den Einfülltrichter 37 in das Füllrohr 11 gedrückt. Das aus der Abgabeöffnung des Füllrohres 11 austretende Wurstbrät zieht den Darm 13 von Füllrohr 11 ab, wodurch eine Wurst gebildet wird. Nach Abgabe einer vorgegebenen Brätmenge wird ein Abdrehvorgang durchgeführt, um die gerade gefüllte Wurst abzuschließen und anschließend mit dem Füllen der nächsten Wurst beginnen zu können. Fig. 1 zeigt zwei bereits hergestellte Würste 12, die durch eine Darmabdrehung 14 voneinander getrennt sind.

Zum Abdrehen wird die Brätförderung gestoppt und die Antriebswelle 19 des Abdrehgetriebes 43 in Drehung versetzt, wodurch der Antriebsabschnitt 17 und das vom Antriebsabschnitt 17 an der Antriebswelle 19 festgeklemmte Füllrohr 11 synchron mitgedreht werden. Durch die in die Ausnehmung 36 des Trägerrohres 27 ragende Schraube 35 des Antriebsabschnitts 17 sowie über die O-Ringe 33 ist ein synchrones Mitdrehen des Trägerrohres 27 gewährleistet. Der Klemmring 31 wiederum gewährleistet ein synchrones Mitdrehen der auf das Trägerrohr 27 aufgesteckten Haltekappe 29.

Während die Haltekappe 29 aufgrund ihrer elastischen Ausgestaltung im Bereich der Durchgangsöffnung 25 der Abziehbewegung des Darmes 13 beim Füllen nachgeben kann und somit ein ordnungsgemäßes Abziehen des Darmes 13 nicht beeinträchtigt, wird beim Abdrehen der Darm 13 von dem Begrenzungsrand der Durchgangsöffnung 25 derart beaufschlagt, daß sich der Darm 13 synchron mit dem Füllrohr 11 und dem Halteorgan 15 mitdreht und gegenüber der zuletzt gebildeten Wurst 12 verdreht wird, wodurch die gewünschte Darmabdrehung gebildet wird.

Zum Aufziehen eines neuen Darmes 13 kann dieser bei weggeschwenktem Stützarm 47 auf das Füllrohr 11 und durch die Durchgangsöffnung 25 der Haltekappe 29 hindurchgeschoben werden, so daß keine Demontage des Halteorgans erforderlich ist. Die Unterbrechung des Füllvorgangs zum Aufziehen eines neuen Darmes 13 ist hierdurch minimal.

Zur Beseitigung von Störungen, z.B. beim Reißen oder Platzen des auf das Füllrohr 11 aufgezogenen Darmes 13, braucht lediglich der Stützarm 47 weggeschwenkt und das Trägerrohr 27 vom Antriebsabschnitt 17 abgezogen zu werden, was durch die Entlüftungsöffnung 41 im Antriebsabschnitt 17 erleichtert wird. Die Verdrehsicherungsschraube 35 braucht hierzu nicht gelöst zu werden. Eine Demontage des Füllrohres 11 ist nicht erforderlich, da das Füllrohr 11 mittels des Antriebsabschnitts 17 am Drehantrieb 19 befestigt bleibt.

Aufgrund der transparenten Ausgestaltung des Trägerrohres 27 ist das Innere des Halteorgans 15 für den Benutzer einsehbar. Eventuell während des Betriebs auftretende Probleme, wie z.B. ein Reißen oder Platzen des Darmes 13, können so frühzeitig erkannt und behoben werden.

### Bezugszeichenliste

- 11: Füllrohr
- 12: Wurst
- 13: Darm
- 14: Abdrehung
- 15: Halteorgan
- 17: Antriebsabschnitt
- 19: Drehantrieb
- 21: Halteabschnitt
- 23: Wandbereich
- 25: Durchgangsöffnung
- 27: Trägerteil, Trägerrohr
- 29: Halteteil, Haltekappe
- 31: Sicherungselement, Klemmring
- 33: Koppelelement, O-Ring
- 35: Stift, Schraube
- 36: Ausnehmung
- 37: Einfüllbereich
- 38: Gewindebohrung
- 39: Klemmflansch
- 41: Entlüftungsöffnung
- 43: Abdrehgetriebe
- 45: Auslegerarm
- 47: Stützarm
- 49: Darmbremshülse

## Patentansprüche

1. Darmhalteeinrichtung für eine Maschine zum portionierenden Abfüllen von pastösen Produkten, insbesondere von Wurstbrät in Natur- und Kunstdärme, mit wenigstens einem an einem hinteren Ende beschickbaren drehbaren Füllrohr (11), auf das ein insbesondere geraffter Darm (13) aufziehbar ist und das an seinem vorderen Ende eine Abgabeöffnung aufweist, und mit einem langgestreckten, das Füllrohr (11) umgebenden und insbesondere rohrförmigen, mehrteiligen und zerlegbaren Halteorgan (15), das über einen hinteren Antriebsbereich zusammen mit dem Füllrohr (11) verdrehbar ist und mit einem vorderen mit dem Darm (13) zusammenwirkenden Halteabschnitt (21) den Darm (13) insbesondere im Bereich der Abgabeöffnung derart beaufschlagt, daß der Darm (13) einerseits vom Füllrohr (11) abziehbar und andererseits durch Verdrehen des Füllrohres (11) in Drehung versetzbar ist, **dadurch gekennzeichnet, daß** das Halteorgan (15) mehrteilig ausgeführt ist und zumindest in einen hinteren Antriebsabschnitt (17), mit dem das Füllrohr (11) an einem gemeinsamen Drehantrieb (19), fixierbar ist, aufweist.

2. Darmhalteeinrichtung nach Anspruch 1,
**dadurch gekennzeichnet,**
**daß** der Halteabschnitt (21) in einem mit dem Darm (13) zusammenwirkenden Bereich durch Abziehen des Darmes (13) vom Füllrohr (11) elastisch verformbar ist.

3. Darmhalteeinrichtung nach Anspruch 1 oder 2,
**dadurch gekennzeichnet,**
**daß** der Halteabschnitt (21) an mehreren in Umfangsrichtung verteilt angeordneten Stellen mit dem Darm (13) haltend zusammenwirkt.

4. Darmhalteeinrichtung nach einem der vorhergehenden Ansprüche,
**dadurch gekennzeichnet,**
**daß** der Halteabschnitt (21) in einem zumindest näherungsweise senkrecht zum Füllrohr (11) verlaufenden Wandbereich (23) eine Durchgangsöffnung (25) für das Füllrohr (11) und den Darm (13) aufweist, deren Begrenzungsrand mit dem Darm (13) haltend zusammenwirkt.

5. Darmhalteeinrichtung nach Anspruch 4,
**dadurch gekeinnzeichnet**,
**daß** die Durchgangsöffnung (25) eine von einer Kreisform abweichende und insbesondere ovale freie Querschnittsfläche aufweist.

6. Darmhalteeinrichtung nach einem der vorhergehenden Ansprüche,
**dadurch gekennzeichnet,**
**daß** der Halteabschnitt (21) ein langgestrecktes, an seinem hinteren Bereich mit dem Antriebsabschnitt (17) verbundenes Trägerteil (27) sowie ein separates, mit dem Darm (13) zusammenwirkendes Halteteil (29) umfaßt, das am Trägerteil (27) lösbar angebracht ist.

7. Darmhalteeinrichtung nach Anspruch 6,
**dadurch gekennzeichnet,**
**daß** das Halteteil (29) kappenförmig ausgebildet und insbesondere auf das freie Ende des Trägerteils (27) aufgesteckt ist.

8. Darmhalteeinrichtung nach Anspruch 6 oder 7,
**dadurch gekennzeichnet,**
**daß** das Halteteil (29) mittels eines ringförmigen Sicherungselementes (31) am Trägerteil (27) festgeklemmt ist.

9. Darmhalteeinrichtung nach einem der Ansprüche 6 bis 8,
**dadurch gekennzeinchnet,**
**daß** das Trägerteil (27) rohrförmig ausgebildet ist und insbesondere eine geschlossene Mantelfläche aufweist.

10. Darmhalteeinrichtung nach einem der Ansprüche 6 bis 9,
**dadurch gekennzeichnet,**
**daß** das Trägerteil (27) aus einem lichtdurchlässigen und vorzugsweise glasklaren Material hergestellt ist, insbesondere einem Kunststoffmaterial.

11. Darmhalteeinrichtung nach einem der vorhergehenden Ansprüche,
**dadurch gekeninzeichnet,**
**daß** der Antriebsabschnitt (17) und der Halteabschnitt (21) zusammengesteckt sind, insbesondere unter Zwischenlage weinigstens eines bevorzugt in Form eines O-Ringes vorgesehenen Koppelelementes (33).

12. Darmhalteeinrichtung nach einem der vorhergehenden Ansprüche,
**dadurch gekennzeichnet,**
**daß** der Antriebsabschnitt (17) und der Halteabschnitt (21) mittels einer formschlüssigen, insbesondere in Form einer
Stift/Ausnehmung-Anordnung vorgesehenen Verdrehsicherung (35, 36) drehfest miteinander gekoppelt sind.

13. Darmhalteeinrichtung nach einem der vorhergehenden Ansprüche,
**dadurch gekennzeichnet,**
**daß** der Antriebsabschnitt (17) rohrförmig ausgebildet ist und bevorzugt eine Länge aufweist, die weniger als die Hälfte und insbesondere weniger als ein Drittel der Füllrohrlänge beträgt.

14. Darmhalteeinrichtung nach einem der vorhergehenden Ansprüche,
**dadurch gekennzeichnet,**
**daß** der Antriebsabschnitt (17) mit dem gemeinsamen Drehantrieb (19) verschraubt ist.

15. Darmhalteeinrichtung nach einem der vorhergehenden Ansprüche,
**dadurch gekennzeichnet,**
**daß** das Füllrohr (11) zwischen dem Antriebsabschnitt (17) und dem Drehantrieb (19) eingespannt ist.

16. Darmhalteeinrichtung nach einem der vorhergehenden Ansprüche,
**dadurch gekennzeichnet,**
**daß** ein insbesondere trichterförmiger Einfüllbereich (37) des Füllrohres (11) mittels eines nach innen vorstehenden Klemmflansches (39) des Antriebsabschnitts (17) gegen eine stirnseitige Anlagefläche des Drehantriebs (19) gedrückt ist.

17. Darmhalteeinrichtung nach einem der vorhergehenden Ansprüche,
**dadurch gekennzeichnet,**
**daß** der Raum zwischen dem Füllrohr (11) und dem Halteorgan (15) über wenigstens eine Entlüftungsöffnung (41) im Halteorgan (15) mit der Umgebung in Verbindung steht.

## Claims

1. A casing holding device for a machine for the apportioning filling of pasty products, in particular of sausage meat, into natural and synthetic casings, having at least one filling pipe (11) which can be loaded and rotated at a rear end, onto which a casing (13), in particular a gathered casing, can be drawn and which has a dispensing opening at its front end, and having an elongated, dismantlable, multi-part holding member (15) which surrounds the filling pipe (11, in particular a holding member, the holding member being rotatable together with the filling pipe (11) via a rear drive region, and acts on the casing (13), in particular in the region of the dispensing opening, with a front holding section (21), which cooperates with the casing (13), such that the casing (13) can, on the one hand, be pulled off the filling pipe (11) and can, on the other hand, be set into rotation by turning the filling pipe (11), **characterised in that** the holding member (15) has, in addition to the front holding section (21), a rear drive section (17) with which the filling pipe (11) can be fixed to a common rotary drive (19), with the holding member (15) being dismantlable at least into the front holding section (21) and into the rear driving section (17).

2. A casing holding device in accordance with claim 1, **characterised in that** the holding section (21) is elastically deformable in a region cooperating with the casing (13) by pulling the casing (13) from the filling pipe (11).

3. A casing holding device in accordance with claim 1 or claim 2, **characterised in that** the holding section (21) cooperates in a holding manner with the casing (13) at a plurality of points arranged distributed in the circumferential direction.

4. A casing holding device in accordance with any one of the preceding claims, **characterised in that** the holding section (21) has a passage opening (25) for the filling pipe (11) and the casing (13) in a wall region (23) extending at least approximately perpendicular to the filling pipe (11), with the boundary margin of said passage opening cooperating in a holding manner with the casing (13).

5. A casing holding device in accordance with claim 4, **characterised in that** the passage opening (25) has a free cross-sectional area which differs from a circular shape and is in particular oval.

6. A casing holding device in accordance with any one of the preceding claims, **characterised in that** the holding section (21) includes an elongated carrier part (27), which is connected at its rear region to the drive section (17), as well as a separate holding part (29) which cooperates with the casing (13) and is releasably attached to the carrier part (27).

7. A casing holding device in accordance with claim 6, **characterised in that** the holding part (29) is made in cap shape and is in particular placed onto the free end of the carrier part (27).

8. A casing holding device in accordance with claim 6 or claim 7, **characterised in that** the holding part (29) is fixedly clamped to the carrier part (27) by means of a ring-shaped securing element (31).

9. A casing holding device in accordance with any one of the claims 6 to 8, **characterised in that** the carrier part (27) is made tubular and in particular has a closed jacket surface.

10. A casing holding device in accordance with any one of the claims 6 to 9, **characterised in that** the carrier part (27) is manufactured from a light-permeable and preferably glass-clear material, in particular from a plastic material.

11. A casing holding device in accordance with any one of the preceding claims, **characterised in that** the drive section (17) and the holding section (21) are plugged together, in particular with the interposition of at least one coupling element (33) preferably provided in the form of an O ring.

12. A casing holding device in accordance with any one of the preceding claims**, characterised in that** the drive section (17) and the holding section (21) are rotationally fixedly coupled to one another by means of a shape-matched security against rotation (35, 36) in particular provided in the form of a pin/recess arrangement.

13. A casing holding device in accordance with any one of the preceding claims, **characterised in that** the drive section (17) is made tubular and preferably has a length which amounts to less than half, and in particular less than a third of the filling pipe length.

14. A casing holding device in accordance with any one of the preceding claims, **characterised in that** the drive section (17) is screwed to the common rotary drive (19).

15. A casing holding device in accordance with any one of the preceding claims, **characterised in that** the filling pipe (11) is clamped between the drive section (17) and the rotary drive (19).

16. A casing holding device in accordance with any one of the preceding claims, **characterised in that** a filling region (37), in particular a funnel-shaped filling region, of the filling pipe (11) is pressed toward an end-face contact surface of the rotary drive (19) by means of an inwardly projecting clamping flange (39).

17. A casing holding device in accordance with any one of the preceding claims, **characterised in that** the space between the filling pipe (11) and the holding member (15) is connected to the environment via at least one venting opening (41) in the holding member (15).

## Revendications

1. Dispositif de retenue de boyau pour une machine destinée au remplissage par portions de produits pâteux, en particulier de chair à saucisse, dans des boyaux naturels et artificiels, comprenant au moins un tube de remplissage rotatif (11) susceptible d'être alimenté à une extrémité postérieure, sur lequel peut être enfilé un boyau (13), en particulier de manière plissée, et comprenant un organe de maintien allongé (15), qui entoure le tube de remplissage (11), en plusieurs parties et démontable, en particulier de forme tubulaire, ce dispositif de maintien étant mis en rotation conjointement avec le tube de remplissage (11) via une zone d'entraînement postérieure, et comprenant un tronçon de maintien antérieur (21) qui coopère avec le boyau (13) et qui sollicite le boyau (13), en particulier dans la zone de l'ouverture de distribution, de telle façon que le boyau (13) est d'une part extractible depuis le tube de remplissage (11) et peut d'autre part être mis en rotation par rotation du tube de remplissage (11), **caractérisé en ce que** l'organe de maintien (15) comprend, en plus du tronçon de maintien antérieur (21), un tronçon d'entraînement postérieur (17) au moyen duquel le tube de remplissage (11) est susceptible d'être fixé sur un entraînement de rotation commun (19), et l'organe de maintien (15) est démontable, au moins dans le tronçon de maintien antérieur (21) et dans le tronçon d'entraînement postérieur (17).

2. Dispositif de retenue de boyau selon la revendication 1,
**caractérisé en ce que** le tronçon de maintien (21) est élastiquement déformable, dans une région qui coopère avec le boyau (13), par extraction du boyau (13) depuis le tube de remplissage (11).

3. Dispositif de retenue de boyau selon la revendication 1 ou 2,
**caractérisé en ce que** le tronçon de maintien (21) coopère avec le boyau (13) en le retenant en plusieurs emplacements agencés de façon répartie en direction périphérique.

4. Dispositif de retenue de boyau selon l'une des revendications précédentes,
**caractérisé en ce que** le tronçon de maintien (21) comporte, dans une région de paroi (23) qui s'étend au moins approximativement perpendiculairement au tube de remplissage (11), une ouverture traversante (25) pour le tube de remplissage (11) et pour le boyau (13), dont la bordure de délimitation coopère avec le boyau (13) en le retenant.

5. Dispositif de retenue de boyau selon la revendication 4,
**caractérisé en ce que** l'ouverture traversante (25) comporte une surface de section transversale libre avec une forme qui s'écarte d'une forme circulaire, et en particulier ovale.

6. Dispositif de retenue de boyau selon l'une des revendications précédentes,
**caractérisé en ce que** le tronçon de maintien (21) comprend une partie porteuse (27) allongée, reliée au tronçon d'entraînement (17) dans sa région postérieure, ainsi qu'une partie de maintien (29) séparée, qui coopère avec le boyau (13) et qui est montée de façon détachable sur la partie porteuse (27).

7. Dispositif de retenue de boyau selon la revendication 6,
**caractérisé en ce que** la partie de maintien (29) est réalisée en forme de capuchon et est en particulier enfilée sur l'extrémité libre de la partie porteuse (27).

8. Dispositif de retenue de boyau selon la revendication 6 ou 7,
**caractérisé en ce que** la partie de maintien (29) est fermement coincée sur la partie porteuse (27) au moyen d'un élément de blocage annulaire (31).

9. Dispositif de retenue de boyau selon l'une des revendications 6 à 8,
**caractérisé en ce que** la partie porteuse (27) est réalisée sous forme tubulaire et comporte en particulier une surface enveloppe fermée.

10. Dispositif de retenue de boyau selon l'une des revendications 6 à 9,
**caractérisé en ce que** la partie porteuse (27) est réalisée en un matériau translucide et de préférence transparent, en particulier une matière plastique.

11. Dispositif de retenue de boyau selon l'une des revendications précédentes,
**caractérisé en ce que** le tronçon d'entraînement (17) et le tronçon de maintien (21) sont mutuellement emboîtés, en particulier avec interposition d'au moins un élément d'accouplement (33), prévu de préférence sous la forme d'un joint torique.

12. Dispositif de retenue de boyau selon l'une des revendications précédentes,
**caractérisé en ce que** le tronçon d'entraînement (17) et le tronçon de maintien (21) sont couplés l'un à l'autre solidairement en rotation au moyen d'un blocage anti-rotation (35, 36) à coopération de formes, prévu en particulier sous la forme d'un agencement à goupille-et-logement.

13. Dispositif de retenue de boyau selon l'une des revendications précédentes,
**caractérisé en ce que** le tronçon d'entraînement (17) est réalisé sous forme tubulaire et présente de préférence une longueur qui s'élève à moins de la moitié et en particulier moins du tiers de la longueur du tube de remplissage.

14. Dispositif de retenue de boyau selon l'une des revendications précédentes,
**caractérisé en ce que** le tronçon d'entraînement (17) est vissé avec l'entraînement de rotation commun (19).

15. Dispositif de retenue de boyau selon l'une des revendications précédentes,
**caractérisé en ce que** le tube de remplissage (11) est serré entre le tronçon d'entraînement (17) et l'entraînement de rotation (19).

16. Dispositif de retenue de boyau selon l'une des revendications précédentes,
**caractérisé en ce qu'**une zone de remplissage (37), en particulier en forme d'entonnoir, du tube de remplissage (11), est poussée au moyen d'une bride de serrage (39), en saillie vers l'intérieur, du tronçon d'entraînement (17), contre une surface d'appui frontale de l'entraînement de rotation (19).

17. Dispositif de retenue de boyau selon l'une des revendications précédentes,
**caractérisé en ce que** l'espace entre le tube de remplissage (11) et l'organe de maintien (15) communique avec l'environnement via au moins une ouverture de mise à l'air (41) dans l'organe de maintien (15).
